# EUROPEAN PATENT SPECIFICATION

(11) **EP 3 231 678 B1**
(45) Date of publication and mention of the grant of the patent: **05.12.2018**
(21) Application number: 17165897.4
(22) Date of filing: 11.04.2017
(51) Int. Cl.: B60T 11/10, B60T 11/20, B60T 11/22, B60T 15/46

(54) **DEVICE FOR CONTROLLING THE BRAKING OF VEHICLES**
BREMSSTEUERVORRICHTUNG FÜR EIN FAHRZEUG
SYSTÈME DE CONTRÔLE DE FREINAGE POUR VÉHICULE

(30) Priority: 13.04.2016 IT UA20162573
(43) Date of publication of application: 18.10.2017
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 995 516
- WO-A1-2006/070271
- WO-A2-2012/095767
- DE-A1- 3 728 310
- DE-T5-112011 105 331
- FR-A1- 2 573 019
- GB-A- 2 000 565
- GB-A- 2 252 600
- US-A- 3 165 980

## Description

The present invention relates to a device for controlling the braking of vehicles.

As is known, to date towing vehicles are connected to their trailer by means of a connecting device which allows the respective braking systems to be put in communication with each other, in such a way that the braking of the towing vehicle operated by the operator also causes the braking of the towed trailer.

The braking system of the trailer is therefore driven by the braking system of the tractor in order to synchronize the braking forces acting on them.

A similar braking device is already disclosed in the DE 11 2011 105 331 T5.

The recently introduced regulations enforced more severe braking performance than in the past both for trailers and for towing vehicles. In particular, the braking of the trailer shall be activated with a certain advance in time with respect to the one of the towing vehicle.

As is known, to deliver a pressurized work fluid to the brakes of the towing vehicle and of the trailer are used the so-called master cylinders, which generally comprise a seat, communicating with a storage tank of a work fluid, with a first braking line connected to the towing vehicle and with a second braking line connected to the trailer, where inside said seat a piston is arranged sliding which is adapted to deliver the pressurized work fluid to the respective braking systems.

In order to obtain the aforesaid advance in time, devices are generally used adapted to delay the operation of the brakes of the towing vehicle.

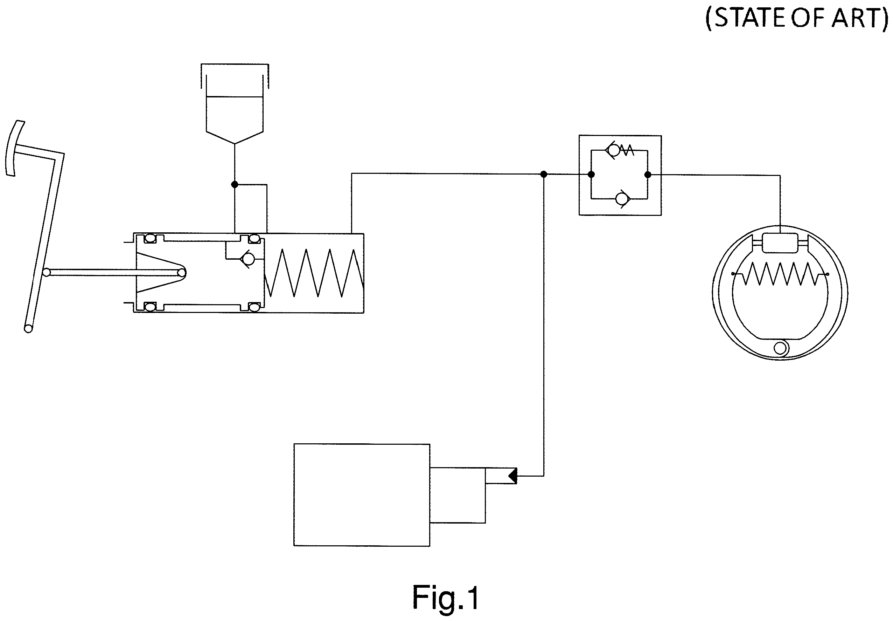

A solution of known type is shown in Figure 1 and provides for the presence, along the braking line which connects the master cylinder to the braking system of the towing vehicle, of valve means adapted to allow the work fluid to flow towards the towing vehicle itself only as a result of the achievement of a predefined pressure at its extremities, so as to enable, in the meantime, the activation of the brakes of the trailer. These devices also provide for the presence of a return valve adapted to allow the work fluid to flow towards the master cylinder when the relevant piston comes back to its idle position.

This solution may however involve the so-called "residual pressures" that keep the braking system active even during the return step of the pedal to the idle position.

In order to overcome this drawback, an additional connection line may be used which is interposed between the master cylinder and the braking system of the towing vehicle, along which a throttle is arranged.

Even this solution has some drawbacks.

More in detail, it is particularly difficult to calibrate the aforementioned throttle which, if too small, anyway is likely to cause residual pressures while, if too big, may not to generate the advance in time of the braking system of the trailer as required by the regulations.

The main aim of the present invention is to provide a device for controlling the braking of vehicles that allows to overcome the above mentioned drawbacks and, in particular, that allows to advance the activation of the braking system of the trailer with respect to that of the towing vehicle and, at the same time, to prevent undesirable residual pressures from occurring when the brake pedal is in the idle position.

Within this aim, one object of the present invention is to provide a device that is simple to make and safe to operate.

Another object of the present invention is to provide a device for controlling the braking of vehicles that allows to overcome the aforementioned drawbacks of the prior art within a simple, rational, easy, effective to use and affordable solution.

The aforementioned objects are achieved by this device for controlling the braking of vehicles according to claim 1.

Other characteristics and advantages of the present invention will become more evident from the description of a preferred, but not exclusive, embodiment of a device for controlling the braking of vehicles, illustrated by way of an indicative yet non-limiting example, in the attached drawings wherein:
Figure 1 is a schematic representation of a known solution;
Figure 2 is a schematic representation of a device according to the invention in a first embodiment;
Figure 3 is a sectional view of the device of Figure 2;
Figure 4 is a schematic representation of a device according to the invention in a second embodiment;
Figure 5 is a schematic representation of a device according to the invention in a third embodiment.

With particular reference to these Figures, reference number 1 globally designates a device for controlling the braking of vehicles.

The device 1 comprises a pumping device 2, also called master cylinder, in turn comprising a body 3 wherein is formed at least one seat 4 which has at least a supply port 5, connectable to a work fluid storage tank S, at least a first port 6 for delivery, communicating with at least a first line 7 for braking connectable to the braking system of a vehicle, e.g. a towing vehicle, identified by the letter F in the Figures.

Inside the seat 4 is slidably housed a piston 8, which defines at least a first chamber 4a communicating at least with the first port 6 and which is movable by the braking pedal P of the vehicle to vary the volume of the first chamber itself.

The piston 8 is movable between an idle position, wherein the supply port 5 is in communication with the first chamber 4a, and at least a first braking position, wherein the supply port 5 is isolated from the first chamber 4a. As a result of the displacement from the idle position to the first braking position, the volume of the first chamber 4a decreases and the piston 8 therefore delivers the pressurized work fluid along the first line 7.

Between the piston 8 and the seat 4 is also defined a drain chamber 9 which is in constant communication with the supply port 5 and, therefore, with the tank S. Between the drain chamber 9 and the first chamber 4a, a first sealing element 10 is provided which is associated with the piston 8 and adapted to prevent the work fluid from flowing from the supply port 5 to the first chamber itself.

The device 1 then comprises first valve means 11 located along the first line 7 and adapted to allow the work fluid to flow towards the braking system F as a result of the achievement of a predefined pressure difference at its extremities.

Advantageously, the first valve means 11 are defined inside the body 3.

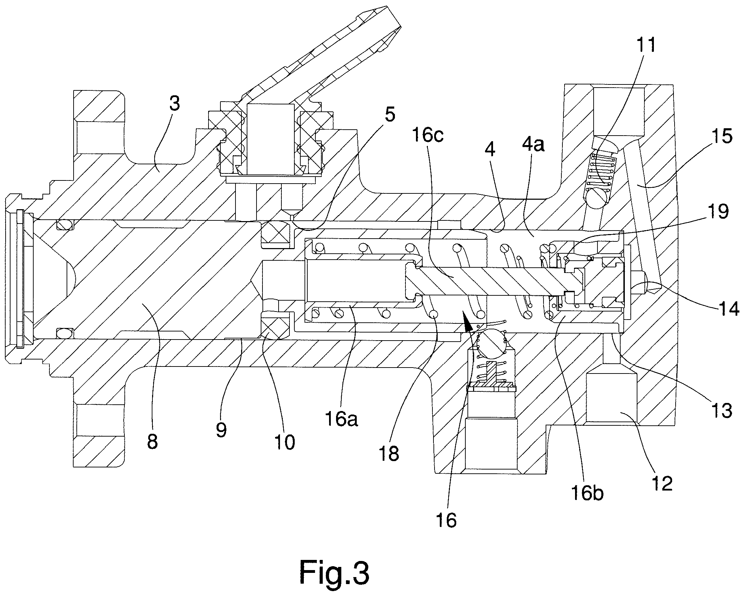

More in detail, as can be seen from the section of Figure 3, the first valve means are of the type of a shutter which is housed inside a corresponding seat and pushed to the closure position of the seat itself by a preloaded spring.

The device 1 further comprises at least a second line 12 for braking which is in direct communication with the first chamber 4a and connectable to at least a user point, e.g. of the type of a trailer-brake valve V.

Preferably, the seat 4 has a second port 13 for delivery communicating with the first chamber 4a and with the second line 12 for braking.

It cannot however be ruled out that the second line 12 can be connected to the first chamber 4a by means of the first line 7, upstream of the first valve means 11, i.e. branching out from the first line itself.

It follows therefore that the first and the second port 6 and 13 are in constant communication with the first chamber 4a and that the pressure of the work fluid along the first line 7, upstream of the first valve means 11, corresponds to the pressure along the second line 12.

In the present description, the terms "upstream" and "downstream" used with reference to the first line 7 refer to the direction of forward movement of the work fluid from the first chamber 4a to the braking system F.

According to the invention, the seat 4 also has at least a by-pass port 14 communicating by means of a by-pass line 15 with the first line 7, downstream of the first valve means 11 and the device 1 comprises at least a control element 16 connected to the piston 8 and adapted to put the by-pass port 14 in communication with the first chamber 4a in the idle position of the piston itself and to isolate the by-pass port 14 from the first chamber 4a in the first braking position. It follows therefore that, when the piston 8 is in the idle position, the first line 7 for braking, downstream of the first valve means 11, is put in communication with the supply port 5, and therefore with the tank S. This allows the work fluid present in the braking system F to be quickly discharged when the pedal P returns to the idle position at the end of the braking phase, by putting the braking system itself in communication with the tank S and bypassing the first valve means 11.

Advantageously, the device 1 comprises second valve means 17 adapted to allow the return of the work fluid present in the first line 7 inside the first chamber 4a during the displacement of the piston 8 from the first braking position towards the idle position.

In the preferred embodiment, the second valve means 17, of the type of a one-way valve, are defined by the control element 16.

More in detail, the control element 16 comprises at least a first thrust element 16a, adapted to interact with the piston 8, at least a second thrust element 16b, adapted to interact with the seat 4, and at least a first closure element 16c, interposed between the thrust elements 16a and 16b and movable relative thereto, which is adapted to open and close the by-pass port 14 in the idle position and in the first braking position of the piston 8, respectively.

Between the thrust elements 16a and 16b are conveniently interposed first elastic means 18, which are adapted to keep the first thrust element 16a in support against the piston 8 and the second thrust element 16b in support against an abutment surface defined by the seat 4, while between the second thrust element 16b and the first closure element 16c are interposed second elastic means 19 adapted to push the first closure element itself towards the by-pass port 14. The second elastic means 19 and the first closure element 16c define the second valve means 17, since they allow opening the by-pass port 14 when the pressure in the first line 7 is higher than that in the first chamber 4a even if the piston 8 has not reached the idle position yet.

The first closure element 16c is therefore kinematically connected to the piston 8, i.e. it is connected to its stroke and therefore changes its position inside the first chamber 4a depending on the position of the piston itself, and at the same time is movable relative thereto.

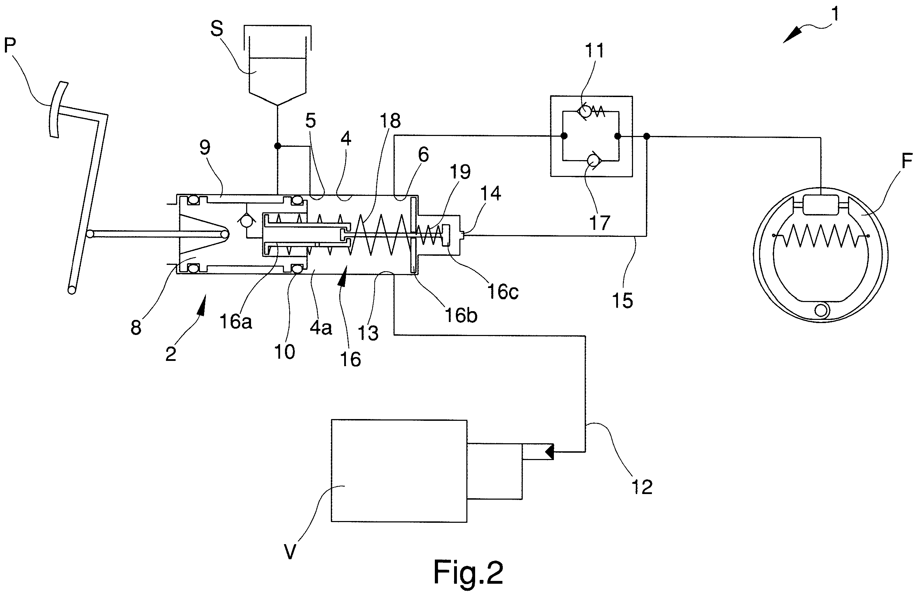

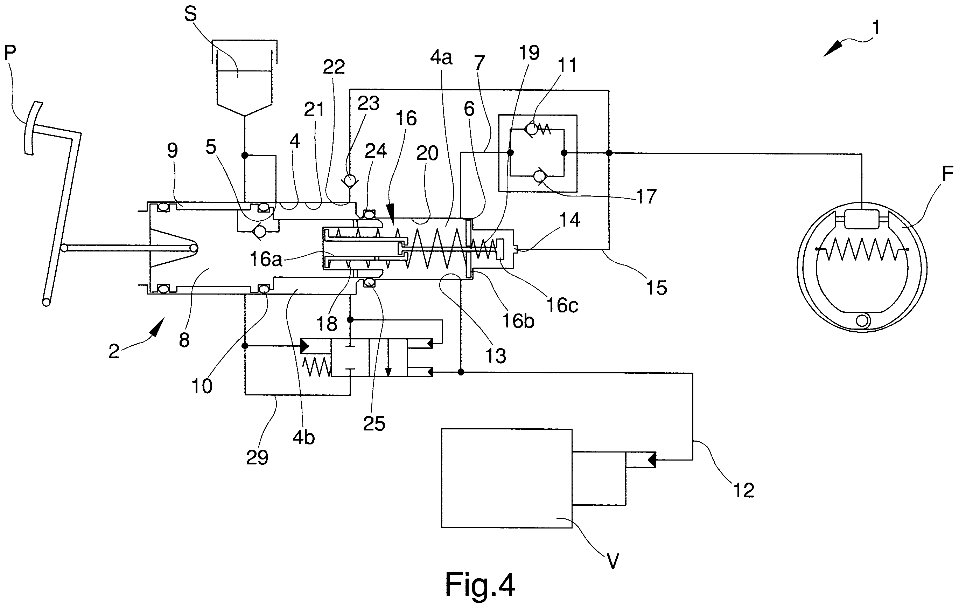

In the embodiments shown in the Figures 2 and 4, the first closure element 16c has a first extremity which is adapted to operate in conjunction with the first thrust element 16a, which entrains the first closure element 16c away from the by-pass port 14 as a result of the displacement of the piston 8 towards the idle position, and a second extremity which is adapted to close the by-pass port 14 and on which the second elastic means 19 operate. More particularly, due to the displacement of the piston 8 towards the first braking position, the first thrust element 16a slides with respect to the first closure element 16c by pressing the first elastic means 18 and allowing the second elastic means 19 to push the first closure element itself towards the by-pass port 14 until its first extremity leans against the first thrust element 16a.

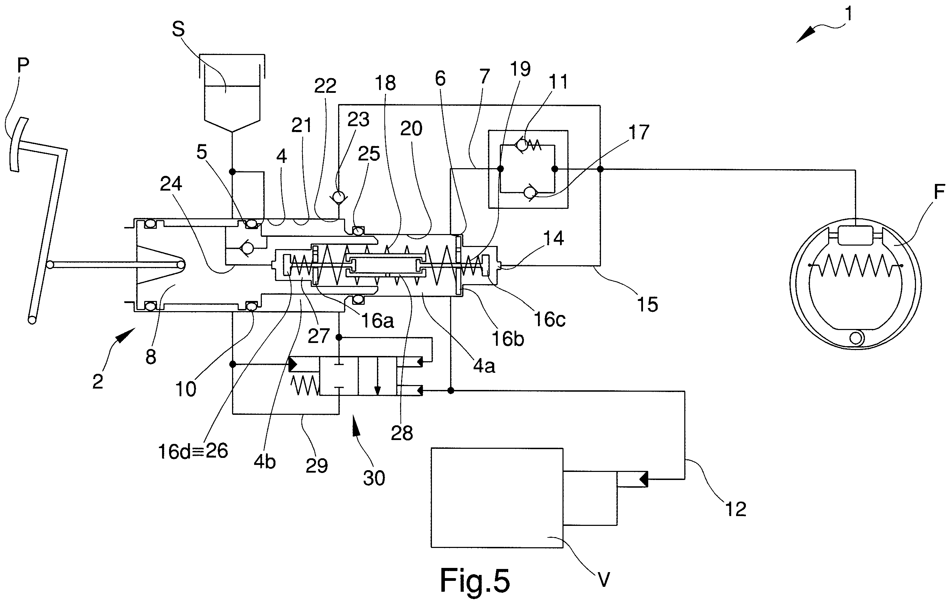

In the embodiments shown in Figures 4 and 5, the seat 4 has a first stretch 20 communicating at least with the first port 6 and with the by-pass port 14 and a second stretch 21 communicating with the supply port 5, where the first stretch 20 has a smaller diameter than the second stretch 21. In turn, the piston 8 defines the first chamber 4a inside the first stretch 20 and defines a second chamber 4b inside the second stretch 21.

The second chamber 4b has a third port 22 for delivery communicating with the first line 7 downstream of the first valve means 11. It follows, therefore, that as a result of the displacement of the piston 8 from the idle position towards the first braking position, one part of the work fluid contained in the second chamber 4b is delivered to the braking system F through the third port 22, in such a way as to fill it up and thus move the brake shoes close to the relevant friction surfaces.

Suitably, there are third valve means 23 which are adapted to prevent the work fluid from returning from the first line 7 inside the second chamber 4b. Preferably, the third valve means 23, e.g. of the type of a one-way valve, are interposed between the third port 22 and the first line 7.

Advantageously, in the embodiments of Figures 4 and 5, at least a passage channel 24 is provided for the work fluid, which is adapted to put the first chamber 4a in communication with the supply port 5 (and therefore with the tank S) when the piston 8 is in the idle position, and closure means are provided which are adapted to isolate the first chamber 4a from the supply port 5 when the piston 8 is in the first braking position. In the embodiments shown in the figures, the passage channel 24 is formed inside the piston 8.

In the embodiment of Figure 4, the closure means correspond to the first sealing element 10, which is adapted to isolate the supply port 5 from the second chamber 4b. In this embodiment, the passage channel 24 faces onto the lateral surface of the piston 8, downstream of the first sealing element 10 (i.e. beyond the first sealing element 10 with respect to the drain chamber 9), and a second sealing element 25 is provided, associated with the body 3 and arranged along the first stretch 20, which is adapted to interact with the piston itself to prevent the crossing of the passage channel 24 as a result of the achievement of a second work position (that is, arranged further on, taking into account the displacement of the piston 8 away from the idle position) subsequent to the first braking position. The supply port 5 and the passage channel 24 are thus closed in sequence during the stroke of the piston 8 away from the idle position.

In the embodiment shown in Figure 5, on the other hand, the passage channel 24 faces on one side onto the drain chamber 9, and therefore upstream of the first sealing element 10 and, on the other side, inside the first chamber 4a. In this embodiment, the closure means comprise, in addition to the first sealing element 10, also a shuttering element 26 arranged inside the first chamber 4a and adapted to isolate the passage channel 24 from the first chamber itself as a result of the achievement of the first braking position. Advantageously, the shuttering element 26 is defined by the control element 16.

More particularly, in this third embodiment, the control element 16 comprises, in addition to the first closure element 16c, on which operate the second elastic means 19 and which is adapted to close the by-pass port 14, also a second closure element 16d, which defines the shuttering element 26 and on which third elastic means 27 operate. The third elastic means 27 are interposed between the first thrust element 16a and the second closure element 16d and are adapted to push the latter towards the closure position of the passage channel 24. Suitably, the control element 16 comprises an interconnection element 28 of the closure elements 16c and 16d. More in detail, the closure elements 16c and 16d are associated movable with the interconnection element 28 and have a relative extremity adapted to interact with the interconnection element itself.

In the embodiments shown in Figures 4 and 5, the device also comprises at least a drain line 29, interposed between the second chamber 4b and the drain chamber 9, and comprises fourth valve means 30 located along the drain line itself. More particularly, the fourth valve means 30 are movable between a closed configuration and an open configuration wherein they prevent and permit the work fluid flowing from the second chamber 4b towards the tank S, respectively. The fourth valve means 30 are adapted to switch from the closed configuration to the open configuration as a result of the achievement of a predefined pressure value inside said first and second chambers and resulting from the exceeding of the second braking position by the piston 8.

In the embodiments shown in Figures 4 and 5, the drain line 29 is defined outside the seat 4.

The operation of the present invention is as follows.

In the first embodiment shown in Figure 2, as a result of the pressure exerted on the pedal P, the piston 8 moves from the idle position to the first braking position, at which the first sealing element 10 isolates the first chamber 4a from the supply port 5, thus allowing the pressurization of the first chamber itself, and the first closure element 16c isolates the first chamber 4a from the by-pass line 15. The further displacement of the piston 8 thus causes the delivery of pressurized fluid along the first and second line 7 and 12. While the work fluid running along the second line 12 causes the activation of the trailer-brake valve V and, therefore, of the braking system of the respective trailer, the work fluid flowing along the first line 7 does not reach the braking system F until its pressure achieves the calibration pressure of the first valve means 11. The first valve means 11 therefore open with a certain delay with respect to the activation of the trailer-brake valve V.

When the piston 8 returns to the idle position, the first sealing element 10 puts again the first chamber 4a in communication with the supply port 5 and the first closure element 16c opens the by-pass port 14, thereby allowing the work fluid to be discharged into the tank S passing through the by-pass line 15.

In the embodiments shown in Figures 4 and 5, as a result of the displacement of the piston 8 from the idle position to the first braking position, the first chamber 4a is isolated from the supply port 5.

In detail, in the second embodiment of Figure 4 when the piston 8 achieves the first braking position, the first sealing element 10 isolates the supply port 5 from the second chamber 4b and the first closure element 16c closes the by-pass port 14. The first and the second chamber 4a and 4b continue to be in communication with each other by means of the passage channel 24. During this phase, therefore the displacement of the piston 8 causes the delivery of the pressurized work fluid to the braking system F through the third port 22, to the trailer-brake valve V through the second port 13 and to the first valve means 11 through the first port 6. When the piston 8 reaches the second braking position, the second sealing element 25 prevents the work fluid from flowing through the passage channel 24 so that the first and the second chamber 4a and 4b are pressurized and isolated from each other.

In the embodiment of Figure 5, on the other hand, the first and the second chamber 4a and 4b are isolated from each other when the first braking position is reached, wherein the first sealing element 10 isolates the supply port 5 from the second chamber 4b, the second closure element 16d isolates the passage channel 24 from the first chamber 4a and the first closure element 16c isolates the by-pass line 15 from the first chamber 4a.

When the chambers 4a and 4b are isolated from each other, the displacement of the piston 8 causes the activation of the trailer-brake valve V and the filling up of the stretch of the first line 7 to the braking system F.

Subsequently, once the pressure difference at the extremities reaches the calibration value, the first valve means 11 open and allow the braking system F to activate.

The further displacement of the piston 8 causes the opening of the fourth valve means 30, which were in the closed configuration so far, thus allowing the excess work fluid in the second chamber 4b to be discharged, by opening the connection to the drain chamber 9 and, therefore, to the tank S.

As for the first embodiment, also in this case the return of the piston 8 to the idle position puts the by-pass port 14 in communication with the supply port 5 and, therefore, the work fluid flows from the braking system F through the by-pass line 15.

In particular, in the second embodiment of Figure 4, the work fluid returning from the braking system F enters the first chamber 4a through the by-pass line 15, reaches the second chamber 4b by means of the passage channel 24, thus entering in communication with the supply port 5.

In the third embodiment of Figure 5, on the other hand, the work fluid returning from the braking system F enters the first chamber 4a through the by-pass line 15, crosses the passage channel 24 due to the opening of the second closure element 16d and reaches the drain chamber 9.

It has in practice been found that the described invention achieves the intended objects and in particular the fact is emphasized that the presence of the by-pass line and of the by-pass port communicating with the first chamber prevents residual pressures from occurring during the return stroke of the piston towards the idle position.

The device which the present invention relates to allows therefore both to delay the activation of the brakes of the towing vehicle with respect to those of the trailer, as required by the regulations, and to discharge the work fluid easily during the return stroke of the piston.

## Claims

1. Device (1) for controlling the braking of vehicles, comprising:
- a pumping device (2) of a work fluid comprising a body (3) wherein at least a seat (4) is formed having a supply port (5), connectable to a work fluid storage tank (S), and at least a first port (6) for delivery, communicating with at least a first line (7) for braking connectable to the braking system (F) of a vehicle, where inside said seat (4) is slidably housed a piston (8) adapted to define at least a first chamber (4a) communicating at least with said first port (6) for braking and which is movable by the braking pedal (P) of the vehicle between an idle position, wherein said supply port (5) is communicating with said first chamber (4a), and at least a first braking position, wherein said supply port (5) is isolated from said first chamber (4a);
- first valve means (11) located along said first line (7) for braking to allow the flow of the work fluid towards the braking system (F) of the vehicle as a result of the achievement of a predefined pressure difference at its extremities;
- at least a second line (12) for braking directly communicating with said first chamber (4a) and connectable to at least a user point (V);
**characterized in that** said seat (4) has at least a by-pass port (14) communicating by means of a by-pass line (15) with said first line (7) for braking, downstream of said first valve means (11), and **in that** it comprises at least a control element (16) connected to said piston (8) and adapted to put said by-pass port (14) in communication with said first chamber (4a) in the idle position, to connect said first line (7) for braking to said supply port (5), and to isolate said by-pass port (14) from said first chamber (4a) in the first braking position.

2. Device (1) according to claim 1, **characterized in that** said seat (4) comprises a second port (13) for delivery communicating with said first chamber (4a) and with said second line (12) for braking.

3. Device (1) according to claim 1 or 2, **characterized in that** said first valve means (11) are defined inside said body (3).

4. Device (1) according to one or more of the preceding claims, **characterized in that** said first valve means (11) are the type of a shutter housed inside a corresponding seat and pushed to the closure position of the seat itself by a preloaded spring.

5. Device (1) according to one or more of the preceding claims, **characterized in that** it comprises second valve means (17) adapted to allow the return of the work fluid from said first line (7) for braking towards said first chamber (4a) during the displacement of said piston (8) from the first braking position to the idle position.

6. Device (1) according to claim 5, **characterized in that** said second valve means (17) are defined by said control element (16).

7. Device (1) according to claim 6, **characterized in that** said control element (16) comprises at least a first thrust element (16a), adapted to interact with said piston (8), at least a second thrust element (16b), adapted to interact with said seat (4), and at least a first closure element (16c) interposed between said thrust elements (16a, 16b) and movable relative thereto, adapted to open and close said by-pass port (14) in the idle position and in the first braking position, respectively.

8. Device (1) according to claim 7, **characterized in that** it comprises first elastic means (18) interposed between said thrust elements (16a, 16b) to keep them in support against said piston (8) and against an abutment surface of said seat (4) respectively, and second elastic means (19) interposed between said second thrust element (16b) and said first closure element (16c) and adapted to push the latter towards said by-pass port (14), said second elastic means (19) and said first closure element (16c) defining said second valve means (17).

9. Device (1) according to one or more of the preceding claims, **characterized in that** said seat (4) has a first stretch (20) communicating at least with said first port (6) for delivery and with said by-pass port (14) and a second stretch (21) communicating with said supply port (5), where said first stretch (20) has a smaller diameter than said second stretch (21), **in that** said piston (8) defines said first chamber (4a) inside said first stretch (20) and a second chamber (4b) inside said second stretch (21) and **in that** said second chamber (4b) has a third port (22) for delivery communicating with said first line (7) for braking downstream of said first valve means (11), third valve means (23) being provided adapted to prevent the return of the work fluid inside said second chamber (4b).

10. Device (1) according to claim 9, **characterized in that** said third valve means (23) are interposed between said third port (22) for delivery and said first line (7) for braking.

11. Device (1) according to claim 9 or 10, **characterized in that** it comprises at least a passage channel (24) of the work fluid adapted to put said first chamber (4a) in communication with said supply port (5) when said piston (8) is in the idle position, and **in that** it comprises closure means (10, 26) adapted to isolate said first chamber (4a) from said supply port (5) when said piston (8) is in the first braking position.

12. Device (1) according to claim 11, **characterized in that** said closure means comprise at least a first sealing element (10) associated with said piston (8) and adapted to isolate said supply port (5) from the second chamber (4b) in the first braking position and **in that** said passage channel (24) is formed on said piston (8) and faces onto its lateral surface downstream of said first sealing element (10), at least a second sealing element (25) being provided which is arranged along said first stretch (20) and adapted to interact with said piston (8) to prevent the crossing of said passage channel (24) as a result of the achievement of a second braking position subsequent to said first braking position.

13. Device (1) according to claim 11, **characterized in that** said closure means comprise at least a first sealing element (10) associated with said piston (8) and adapted to isolate said supply port (5) from the second chamber (4b) in the first braking position, **in that** said passage channel (24) is formed on said piston (8) and faces, on one side, onto a drain chamber (9) communicating with said supply port (5), defined between said piston (8) and said seat (4) and arranged upstream of said first sealing element (10), and on the other side, onto said first chamber (4a), and **in that** said closure means comprise a shuttering element (26) adapted to isolate said passage channel (24) from said first chamber (4a) as a result of the achievement of said first braking position.

14. Device (1) according to claim 13, **characterized in that** said control element (16) comprises a second closure element (16d), which defines said shuttering element (26), on which act third elastic means (27), interposed between said first thrust element (16a) and the second closure element itself, adapted to push the latter towards the closure position of said passage channel (24), said control element (16) comprising a reciprocal interconnection element (28) of said closure elements (16c, 16d).

15. Device (1) according to one or more of claims 8 to 13, **characterized in that** it comprises at least a drain line (29), interposed between said second chamber (4b) and a drain chamber (9) communicating with said supply port (5), and **in that** it comprises fourth valve means (30) located along said drain line (29) and movable between a closed configuration and an open configuration wherein they prevent and permit the flow of the work fluid from the second chamber (4b) to said drain chamber (9), said fourth valve means (30) being adapted to switch from the closed configuration to the open configuration as a result of the achievement of a predefined pressure value inside of said first and second chambers (4a, 4b).

## Patentansprüche

1. Vorrichtung (1) zum Steuern der Bremsung von Fahrzeugen, umfassend:
- eine Pumpvorrichtung (2) eines Arbeitsfluids, die einen Körper (3) umfasst, wobei mindestens ein Sitz (4) ausgebildet ist, der eine Zufuhröffnung (5), die mit einem Arbeitsfluidspeichertank (S) verbindbar ist, und mindestens eine erste Öffnung (6) für die Abgabe aufweist, die mit mindestens einer ersten Leitung (7) zur Bremsung kommuniziert, die mit dem Bremssystem (F) eines Fahrzeugs verbindbar ist, wobei innerhalb des Sitzes (4) ein Kolben (8) gleitbar untergebracht ist, welcher ausgelegt ist, um mindestens eine erste Kammer (4a) zu definieren, die mindestens mit der ersten Öffnung (6) zur Bremsung kommuniziert, und welcher durch das Bremspedal (P) des Fahrzeugs zwischen einer Leerlaufstellung, wobei die Zufuhröffnung (5) mit der ersten Kammer (4a) kommuniziert, und mindestens einer ersten Bremsstellung, wobei die Zufuhröffnung (5) von der ersten Kammer (4a) isoliert ist, bewegbar ist;
- erste Ventilmittel (11), die sich entlang der ersten Leitung (7) zur Bremsung befinden, um die Strömung des Arbeitsfluids zum Bremssystem (F) des Fahrzeugs in Folge der Erreichung einer vordefinierten Druckdifferenz an ihren Enden zu ermöglichen;
- mindestens eine zweite Leitung (12) zur Bremsung, die direkt mit der ersten Kammer (4a) kommuniziert und mit mindestens einem Benutzerpunkt (V) verbindbar ist;
**dadurch gekennzeichnet, dass** der Sitz (4) mindestens eine Umgehungsöffnung (14) hat, die mittels einer Umgehungsleitung (15) mit der ersten Leitung (7) zur Bremsung kommuniziert und stromabwärts der ersten Ventilmittel (11) ist, und dadurch, dass sie mindestens ein Steuerelement (16) umfasst, das mit dem Kolben (8) verbunden und ausgelegt ist, um die Umgehungsöffnung (14) mit der ersten Kammer (4a) in der Leerlaufstellung in Kommunikation zu versetzen, um die erste Leitung (7) zur Bremsung mit der Zufuhröffnung (5) zu verbinden und um die Umgehungsöffnung (14) von der ersten Kammer (4a) in der ersten Bremsstellung zu isolieren.

2. Vorrichtung (1) nach Anspruch 1, **dadurch gekennzeichnet, dass** der Sitz (4) eine zweite Öffnung (13) für die Abgabe umfasst, die mit der ersten Kammer (4a) und mit der zweiten Leitung (12) zur Bremsung kommuniziert.

3. Vorrichtung (1) nach Anspruch 1 oder 2, **dadurch gekennzeichnet, dass** die ersten Ventilmittel (11) in dem Körper (3) definiert sind.

4. Vorrichtung (1) nach einem oder mehreren der vorhergehenden Ansprüche, **dadurch gekennzeichnet, dass** die ersten Ventilmittel (11) vom Typ einer Absperrung sind, die innerhalb eines entsprechenden Sitzes untergebracht ist und durch eine vorgespannte Feder zur Verschlussstellung des Sitzes selbst geschoben wird.

5. Vorrichtung (1) nach einem oder mehreren der vorhergehenden Ansprüche, **dadurch gekennzeichnet, dass** sie zweite Ventilmittel (17) umfasst, die ausgelegt sind, um den Rückfluss des Arbeitsfluids aus der ersten Leitung (7) zur Bremsung zur ersten Kammer (4a) hin während der Verschiebung des Kolbens (8) von der ersten Bremsstellung in die Leerlaufstellung zu ermöglichen.

6. Vorrichtung (1) nach Anspruch 5, **dadurch gekennzeichnet, dass** die zweiten Ventilmittel (17) durch das Steuerelement (16) definiert werden.

7. Vorrichtung (1) nach Anspruch 6, **dadurch gekennzeichnet, dass** das Steuerelement (16) mindestens ein erstes Schubelement (16a), das ausgelegt ist, um mit dem Kolben (8) zusammenzuwirken, mindestens ein zweites Schubelement (16b), das ausgelegt ist, um mit dem Sitz (4) zusammenzuwirken, und mindestens ein erstes Verschlusselement (16c) umfasst, das zwischen den Schubelementen (16a, 16b) angeordnet ist und in Bezug darauf bewegbar ist und das ausgelegt ist, um die Umgehungsöffnung (14) jeweils in der Leerlaufstellung und in der ersten Bremsstellung zu öffnen und zu schließen.

8. Vorrichtung (1) nach Anspruch 7, **dadurch gekennzeichnet, dass** sie erste elastische Mittel (18), die zwischen den Schubelementen (16a, 16b) angeordnet sind, um diese in Abstützung jeweils gegen den Kolben (8) und gegen eine Auflagefläche des Sitzes (4) zu halten, und zweite elastische Mittel (19) umfasst, die zwischen dem zweiten Schubelement (16b) und dem ersten Verschlusselement (16c) angeordnet sind und ausgelegt sind, um letzteres zur Umgehungsöffnung (14) hin zu schieben, wobei die zweiten elastischen Mittel (19) und das erste Verschlusselement (16c) die zweiten Ventilmittel (17) definieren.

9. Vorrichtung (1) nach einem oder mehreren der vorhergehenden Ansprüche, **dadurch gekennzeichnet, dass** der Sitz (4) einen ersten Abschnitt (20), der mindestens mit der ersten Öffnung (6) für die Abgabe und mit der Umgehungsöffnung (14) kommuniziert, und einen zweiten Abschnitt (21) aufweist, der mit der Zufuhröffnung (5) kommuniziert, wobei der erste Abschnitt (20) einen kleineren Durchmesser als der zweite Abschnitt (21) aufweist, dadurch, dass der Kolben (8) die erste Kammer (4a) innerhalb des ersten Abschnitts (20) und eine zweite Kammer (4b) innerhalb des zweiten Abschnitts (21) definiert, und dadurch, dass die zweite Kammer (4b) eine dritte Öffnung (22) für die Abgabe aufweist, die mit der ersten Leitung (7) zur Bremsung stromabwärts der ersten Ventilmittel (11) kommuniziert, wobei dritte Ventilmittel (23) vorgesehen sind, die ausgelegt sind, um den Rückfluss des Arbeitsfluids innerhalb der zweiten Kammer (4b) zu verhindern.

10. Vorrichtung (1) nach Anspruch 9, **dadurch gekennzeichnet, dass** die dritten Ventilmittel (23) zwischen der dritten Öffnung (22) zur Abgabe und der ersten Leitung (7) zur Bremsung angeordnet sind.

11. Vorrichtung (1) nach Anspruch 9 oder 10, **dadurch gekennzeichnet, dass** sie mindestens einen Durchgangskanal (24) des Arbeitsfluids umfasst, der ausgelegt ist, um die erste Kammer (4a) mit der Zufuhröffnung (5) in Kommunikation zu versetzen, wenn der Kolben (8) in der Leerlaufstellung ist, und dadurch, dass sie Verschlussmittel (10, 26) umfasst, die ausgelegt sind, um die erste Kammer (4a) von der Zufuhröffnung (5) zu isolieren, wenn der Kolben (8) in der ersten Bremsstellung ist.

12. Vorrichtung (1) nach Anspruch 11, **dadurch gekennzeichnet, dass** die Verschlussmittel mindestens ein erstes abdichtendes Element (10) umfassen, das dem Kolben (8) zugeordnet und ausgelegt ist, um die Zufuhröffnung (5) von der zweiten Kammer (4b) in der ersten Bremsstellung zu isolieren, und dadurch, dass der Durchgangskanal (24) auf dem Kolben (8) ausgebildet ist und auf seiner seitlichen Oberfläche stromabwärts des ersten abdichtenden Elements (10) weist, mindestens ein zweites abdichtendes Element (25), das vorgesehen ist und entlang dem ersten Abschnitt (20) angeordnet ist und ausgelegt ist, um mit dem Kolben (8) zusammenzuwirken, um die Kreuzung des Durchflusskanals (24) als eine Folge der Erreichung einer zweiten Bremsstellung anschließend an die erste Bremsstellung zu verhindern.

13. Vorrichtung (1) nach Anspruch 11, **dadurch gekennzeichnet, dass** die Verschlussmittel mindestens ein erstes abdichtendes Element (10) umfassen, das dem Kolben (8) zugeordnet ist und ausgelegt ist, um die Zufuhröffnung (5) von der zweiten Kammer (4b) in der ersten Bremsstellung zu isolieren, dadurch, dass der Durchgangskanal (24) auf dem Kolben (8) ausgebildet ist und auf einer Seite auf eine Ablaufkammer (9), die mit der Zufuhröffnung (5) kommuniziert und zwischen dem Kolben (8) und dem Sitz (4) definiert ist und stromaufwärts des ersten abdichtenden Elements (10) angeordnet ist, und auf der anderen Seite auf die erste Kammer (4a) weist, und dadurch, dass die Verschlussmittel ein Absperrelement (26) umfassen, das ausgelegt ist, um den Durchgangskanal (24) von der ersten Kammer (4a) als eine Folge der Erreichung der ersten Bremsstellung zu isolieren.

14. Vorrichtung (1) nach Anspruch 13, **dadurch gekennzeichnet, dass** das Steuerelement (16) ein zweites Verschlusselement (16d) umfasst, das das Absperrelement (26) definiert, auf das dritte elastische Mittel (27) einwirken, die zwischen dem ersten Schubelement (16a) und dem zweiten Verschlusselement selbst angeordnet und ausgelegt sind, um letzteres zur Verschlussstellung des Durchgangskanals (24) hin zu schieben, wobei das Steuerelement (16) ein wechselseitiges Zwischenverbindungselement (28) der Verschlusselemente (16c, 16d) umfasst.

15. Vorrichtung (1) nach einem oder mehreren der Ansprüche 8 bis 13, **dadurch gekennzeichnet, dass** sie mindestens eine Ablaufleitung (29) umfasst, die zwischen der zweiten Kammer (4b) und einer Ablaufkammer (9), die mit der Zufuhröffnung (5) kommuniziert, angeordnet ist, und dadurch, dass sie vierte Ventilmittel (30) umfasst, die sich entlang der Ablaufleitung (29) befinden und zwischen einer geschlossenen Anordnung und einer geöffneten Anordnung bewegbar sind, wobei sie die Strömung des Arbeitsfluids von der zweiten Kammer (4b) zur Ablaufkammer (9) verhindern und ermöglichen, wobei die vierten Ventilmittel (30) ausgelegt sind, um von der geschlossenen Anordnung zur geöffneten Anordnung als eine Folge der Erreichung eines vordefinierten Druckwerts innerhalb der ersten und der zweiten Kammer (4a, 4b) zu schalten.

## Revendications

1. Dispositif (1) de commande du freinage de véhicules, comprenant :
- un dispositif de pompage (2) d'un fluide de travail comprenant un corps (3) dans lequel au moins un siège (4) est formé ayant un orifice d'alimentation (5), pouvant être raccordé à un réservoir de stockage de fluide de travail (S), et au moins un premier orifice (6) de distribution, communiquant avec au moins une première conduite (7) de freinage pouvant être raccordée au système de freinage (F) d'un véhicule, où à l'intérieur dudit siège (4) est logé avec capacité de coulissement un piston (8) adapté pour définir au moins une première chambre (4a) communiquant au moins avec ledit premier orifice (6) de freinage et qui peut être déplacé par la pédale de freinage (P) du véhicule entre une position au repos, dans laquelle ledit orifice d'alimentation (5) communique avec ladite première chambre (4a), et au moins une première position de freinage, dans laquelle ledit orifice d'alimentation (5) est isolé de ladite première chambre (4a) ;
- des premiers moyens de soupape (11) situés le long de ladite première conduite (7) de freinage pour permettre l'écoulement du fluide de travail vers le système de freinage (F) du véhicule suite à l'obtention d'une différence de pression prédéfinie au niveau de ses extrémités ;
- au moins une seconde conduite (12) de freinage communiquant directement avec ladite première chambre (4a) et pouvant être raccordée à au moins un point utilisateur (V) ;
**caractérisé en ce que** ledit siège (4) comporte au moins un orifice de dérivation (14) communiquant au moyen d'une conduite de dérivation (15) avec ladite première conduite (7) de freinage, en aval desdits premiers moyens de soupape (11), et **en ce qu'**il comprend au moins un élément de commande (16) raccordé audit piston (8) et adapté pour mettre ledit orifice de dérivation (14) en communication avec ladite première chambre (4a) dans la position au repos, pour raccorder ladite première conduite (7) de freinage audit orifice d'alimentation (5), et pour isoler ledit orifice de dérivation (14) de ladite première chambre (4a) dans la première position de freinage.

2. Dispositif (1) selon la revendication 1, **caractérisé en ce que** ledit siège (4) comprend un deuxième orifice (13) de distribution communiquant avec ladite première chambre (4a) et avec ladite seconde conduite (12) de freinage.

3. Dispositif (1) selon la revendication 1 ou 2, **caractérisé en ce que** lesdits premiers moyens de soupape (11) sont définis à l'intérieur dudit corps (3).

4. Dispositif (1) selon une ou plusieurs des revendications précédentes, **caractérisé en ce que** lesdits premiers moyens de soupape (11) sont du type obturateur logé à l'intérieur d'un siège correspondant et poussé vers la position de fermeture du siège lui-même par un ressort préchargé.

5. Dispositif (1) selon une ou plusieurs des revendications précédentes, **caractérisé en ce qu'**il comprend des deuxièmes moyens de soupape (17) adaptés pour permettre le retour du fluide de travail depuis ladite première conduite (7) de freinage vers ladite première chambre (4a) pendant le déplacement dudit piston (8) de la première position de freinage à la position au repos.

6. Dispositif (1) selon la revendication 5, **caractérisé en ce que** lesdits deuxièmes moyens de soupape (17) sont définis par ledit élément de commande (16).

7. Dispositif (1) selon la revendication 6, **caractérisé en ce que** ledit élément de commande (16) comprend au moins un premier élément de poussée (16a), adapté pour interagir avec ledit piston (8), au moins un second élément de poussée (16b), adapté pour interagir avec ledit siège (4), et au moins un premier élément de fermeture (16c) interposé entre lesdits éléments de poussée (16a, 16b) et mobile par rapport à ceux-ci, adapté pour ouvrir et fermer ledit orifice de dérivation (14) dans la position au repos et dans la première position de freinage, respectivement.

8. Dispositif (1) selon la revendication 7, **caractérisé en ce qu'**il comprend des premiers moyens élastiques (18) interposés entre lesdits éléments de poussée (16a, 16b) pour les garder en support contre ledit piston (8) et contre une surface de butée dudit siège (4) respectivement, et des deuxièmes moyens élastiques (19) interposés entre ledit second élément de poussée (16b) et ledit premier élément de fermeture (16c) et adaptés pour pousser ce dernier vers ledit orifice de dérivation (14), lesdits deuxièmes moyens élastiques (19) et ledit premier élément de fermeture (16c) définissant lesdits deuxièmes moyens de soupape (17).

9. Dispositif (1) selon une ou plusieurs des revendications précédentes, **caractérisé en ce que** ledit siège (4) a un premier allongement (20) communiquant au moins avec ledit premier orifice (6) de distribution et avec ledit orifice de dérivation (14) et un second allongement (21) communiquant avec ledit orifice d'alimentation (5), où ledit premier allongement (20) a un diamètre plus petit que ledit second allongement (21), **en ce que** ledit piston (8) définit ladite première chambre (4a) à l'intérieur dudit premier allongement (20) et une seconde chambre (4b) à l'intérieur dudit second allongement (21) et **en ce que** ladite seconde chambre (4b) comporte un troisième orifice (22) de distribution communiquant avec ladite première conduite (7) de freinage en aval desdits premiers moyens de soupape (11), des troisièmes moyens de soupape (23) étant fournis adaptés pour empêcher le retour du fluide de travail à l'intérieur de ladite seconde chambre (4b).

10. Dispositif (1) selon la revendication 9, **caractérisé en ce que** lesdits troisièmes moyens de soupape (23) sont interposés entre ledit troisième orifice (22) de distribution et ladite première conduite (7) de freinage.

11. Dispositif (1) selon la revendication 9 ou 10, **caractérisé en ce qu'**il comprend au moins un canal de passage (24) du fluide de travail adapté pour mettre ladite première chambre (4a) en communication avec ledit orifice d'alimentation (5) lorsque ledit piston (8) est dans la position au repos, et **en ce qu'**il comprend des moyens de fermeture (10, 26) adaptés pour isoler ladite première chambre (4a) dudit orifice d'alimentation (5) lorsque ledit piston (8) est dans la première position de freinage.

12. Dispositif (1) selon la revendication 11, **caractérisé en ce que** lesdits moyens de fermeture comprennent au moins un premier élément d'étanchéité (10) associé audit piston (8) et adapté pour isoler ledit orifice d'alimentation (5) de la seconde chambre (4b) dans la première position de freinage et **en ce que** ledit canal de passage (24) est formé sur ledit piston (8) et fait face sur sa surface latérale en aval dudit premier élément d'étanchéité (10), au moins un second élément d'étanchéité (25) étant prévu qui est agencé le long dudit premier allongement (20) et adapté pour interagir avec ledit piston (8) pour empêcher la traversée dudit canal de passage (24) suite à l'obtention d'une seconde position de freinage ultérieure à ladite première position de freinage.

13. Dispositif (1) selon la revendication 11, **caractérisé en ce que** lesdits moyens de fermeture comprennent au moins un premier élément d'étanchéité (10) associé audit piston (8) et adapté pour isoler ledit orifice d'alimentation (5) de la seconde chambre (4b) dans la première position de freinage, **en ce que** ledit canal de passage (24) est formé sur ledit piston (8) et fait face, sur un côté, sur une chambre de purge (9) communiquant avec ledit orifice d'alimentation (5), définie entre ledit piston (8) et ledit siège (4) et agencée en amont dudit premier élément d'étanchéité (10), et sur l'autre côté, sur ladite première chambre (4a), et **en ce que** lesdits moyens de fermeture comprennent un élément d'obturation (26) adapté pour isoler ledit canal de passage (24) de ladite première chambre (4a) suite à l'obtention de ladite première position de freinage.

14. Dispositif (1) selon la revendication 13, **caractérisé en ce que** ledit élément de commande (16) comprend un second élément de fermeture (16d), qui définit ledit élément d'obturation (26), sur lequel agissent des troisièmes moyens élastiques (27), interposés entre ledit premier élément de poussée (16a) et le second élément de fermeture lui-même, adaptés pour pousser ce dernier vers la position de fermeture dudit canal de passage (24), ledit élément de commande (16) comprenant un élément de liaison réciproque (28) desdits éléments de fermeture (16c, 16d).

15. Dispositif (1) selon une ou plusieurs des revendications 8 à 13, **caractérisé en ce qu'**il comprend au moins une conduite de purge (29), interposée entre ladite seconde chambre (4b) et une chambre de purge (9) communiquant avec ledit orifice d'alimentation (5), et **en ce qu'**il comprend des quatrièmes moyens de soupape (30) situés le long de ladite conduite de purge (29) et mobiles entre une configuration fermée et une configuration ouverte dans lesquelles ils empêchent et permettent l'écoulement du fluide de travail de la seconde chambre (4b) à ladite chambre de purge (9), lesdits quatrièmes moyens de soupape (30) étant adaptés pour passer de la configuration fermée à la configuration ouverte suite à l'obtention d'une valeur de pression prédéfinie à l'intérieur desdites première et seconde chambres (4a, 4b).
